# Europäisches Patentamt
# European Patent Office
# Office européen des brevets

(19)

(11) Veröffentlichungsnummer: **0 031 943**
**B1**

(12) **EUROPÄISCHE PATENTSCHRIFT**

(45) Veröffentlichungstag der Patentschrift:
14.03.84

(51) Int. Cl.³: **H 04 B 3/46, H 04 L 11/12**

(21) Anmeldenummer: **80108127.4**

(22) Anmeldetag: **22.12.80**

(54) **Überwachung von Übertragungsstrecken für digitale Signale.**

(30) Priorität: **07.01.80 DE 3000339**

(43) Veröffentlichungstag der Anmeldung:
**15.07.81 Patentblatt 81/28**

(45) Bekanntmachung des Hinweises auf die Patenterteilung:
**14.03.84 Patentblatt 84/11**

(84) Benannte Vertragsstaaten:
**AT BE CH DE FR GB IT LI LU NL SE**

(56) Entgegenhaltungen:
**CH - A - 608 151**
**DE - A - 2 442 208**
**DE - A - 2 510 566**
**DE - A - 2 826 675**

(73) Patentinhaber: **SIEMENS AKTIENGESELLSCHAFT,
Berlin und München Wittelsbacherplatz 2,
D-8000 München 2 (DE)**

(72) Erfinder: **Braun, Ewald, Ing. grad., Plattlingerstrasse 63,
D-8000 München 71 (DE)**

Überwachung von Übertragungsstrecken für digitale Signale

Die Erfindung betrifft eine Übertragungsstrekke für digitale Signale mit zwei Leitungsendgeräten, die durch eine Kabelstrecke mit mehreren ferngespeisten Zwischenregeneratoren verbunden sind und bei der die Kabelstrecke in wenigstens zwei getrennte Fernspeiseabschnitte aufgeteilt ist, bei der wenigstens in einem Leitungsendgerät eine Überwachungseinrichtung für die zu übertragenden digitalen Signale vorgesehen ist und bei der der Ausgang der Überwachungseinrichtung mit einer auswertenden Stelle verbunden ist.

Eine solche Übertragungsstrecke ist betriebsintern bekannt.

Übertragungsstrecken für digitale Signale enthalten in bestimmten Abständen in die Kabelstrecke eingefügte Zwischenregeneratoren mit einem Regenerator für jede Übertragungsrichtung, in denen die einzelnen Impulse der übertragenen digitalen Signale amplituden- und zeitmäßig regeneriert werden. Diese Regeneratoren enthalten deshalb neben einem eingangsseitig angeordneten Entzerrer mit Vorverstärker einen Amplitudenentscheider, einen Zeitentscheider und eine Einrichtung zur Taktableitung, die ein Taktsignal für den Zeitentscheider erzeugt (Techn. Mitt. AEG-Telefunken [1974] Beiheft »Pulscodemodulation«, Seiten 16 bis 19). Die Speisung dieser Teile des Zwischenregenerators erfolgt bei Koaxialsystemen über den Innenleiter des Koaxialpaares über die bekannten Fernspeiseweichen nach dem Prinzip der Gleichstromreihenspeisung, bei Lichtwellenleiter-Systemen beispielsweise über ein eigenes Fernspeisekabel und dazugehörenden Fernspeiseumrichter. Die Fernspeiseleistungsspannung und dadurch die Zahl der hintereinander schaltbaren Zwischenregeneratoren ist aus vielerlei Gründen begrenzt. Bei einer längeren Übertragungsstrecke ist es deshalb nötig, diese in mehrere Fernspeiseabschnitte zu unterteilen (Siemens-Zeitschrift 45 [1971] Beiheft »Nachrichten-Übertragungstechnik«, Seiten 96 bis 99).

Die Übertragungsstrecken für digitale Signale können durch verschiedene Maßnahmen überwacht werden. Geeignet ist z. B. eine am empfangsseitigen Ende der Übertragungsstrekke angeordnete Einrichtung zur Überwachung der digitalen Signale auf Coderegelverletzungen (DE-A1-2 826 675). Die bei der Codierung dieser Signale verwendeten Codes haben beispielsweise oft zur Erzeugung gleichstromfreier Signale bestimmte Vorschriften über die Aufeinanderfolge gleichpolarer Impulse. Bei einem empfangsseitigen Auftreten mehrerer gleichpolarer Impulse kann deshalb angenommen werden, daß durch eine Störung die übertragenen Signale verfälscht worden sind und dadurch eine Verletzung der Coderegel erfolgt ist. Dies führt zu einer Alarmierung in der überwachenden Stelle. Der eigentliche Ort des Fehlers ist dabei nach wie vor unbekannt, er kann entlang der gesamten vorangehenden Strecke liegen. Aus diesem Grunde sind Maßnahmen zur Fehlerortung erforderlich. Eins der bekanntesten Fehlerortungsverfahren ist das auch bei dem Fehlerortungssystem der DE-A1-2 826 675 angewandte Schleifenschlußverfahren. Bei diesem Verfahren werden von einer ortenden Endstelle aus nacheinander in den Zwischenregeneratoren sogenannte Schleifen zwischen dem Regenerator für die eine Übertragungsrichtung und dem Regenerator für die Rückrichtung geschlossen, über die dann von der ortenden Stelle aus Prüfsignale übertragen werden. Eine derartige Ortung mittels Schleifenschluß erfolgt bei den bekannten Übertragungsstrecken von den für diesen Zweck vorgesehenen Leitungsendgeräten aus, in denen auch die Einrichtung zur Fernspeisung enthalten sind. Dadurch ergeben sich aber bei mehreren Fernspeiseabschnitten Schwierigkeiten, einen fehlerhaften Zwischenregenerator über die Fernspeiseabschnitte hinweg schnell zu ermitteln. Mittels einer aufwendigen Lösung könnte eine derartige Schwierigkeit behoben werden, indem am Ende jedes Fernspeiseabschnittes ein Leitungsendgerät mit einer Fernspeiseweiche und einem Ortungsgerät angeordnet ist und sich an dieses am Beginn des nächsten Fernspeiseabschnittes ein weiteres sendendes Leitungsendgerät anschließt.

Die Aufgabe der Erfindung besteht also darin, möglichst schnell in Übertragungsstrecken der eingangs genannten Art mit mehreren Fernspeiseabschnitten den Fehlerort einzugrenzen.

Erfindungsgemäß wird die Aufgabe dadurch gelöst, daß wenigstens ein Fernspeiseabschnitt über einen Fernspeiseeinrichtungen enthaltenden Zwischenregenerator gespeist ist und daß dieser Zwischenregenerator eine Überwachungseinrichtung für die zu übertragenden digitalen Signale, eine Einrichtung zur Erzeugung eines AIS-Signals (Alarm Inhibit Signal) und einen Alarmgeber enthält.

Zweckmäßige Varianten der Übertragungsstrecke nach der Erfindung sind den Patentansprüchen 2 bis 4 entnehmbar.

Die Erfindung soll im folgenden anhand der Zeichnung näher erläutert werden. In der Zeichnung zeigt

Fig. 1 eine Übertragungsstrecke für digitale Signale in einer Übertragungsrichtung im Prinzip und

Fig. 2 eine Übertragungsstrecke für digitale Signale mit mehreren Fernspeiseabschnitten für beide Übertragungsrichtungen im Prinzip.

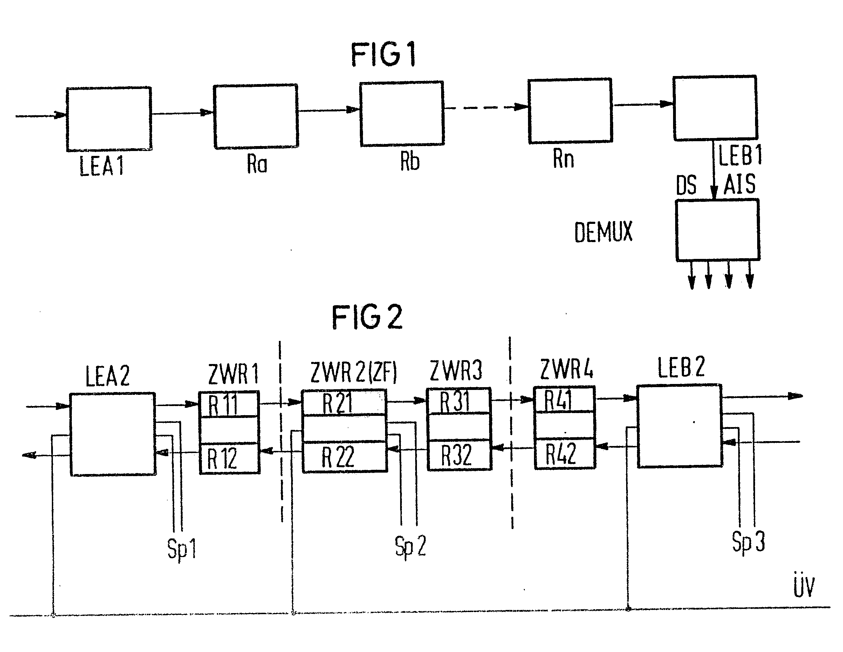

In der Fig. 1 ist mit LEA1 ein erstes Leitungsendgerät bezeichnet, das über eine digitale Schnittstelle die zu übertragenden digitalen Signale erhält. Diese Signale werden im Leitungsendgerät in die für die Übertragungsstrekke zweckmäßigste Form umgeformt. Die Umformung kann beispielsweise eine Verwürfelung sein, es kann sich aber auch zusätzlich eine Umcodierung oder eine Impulsformung erforderlich machen. In der Kabelstrecke sind in bestimmten Abständen jeweils in einem für beide Gesprächsrichtungen gemeinsamen Zwischenregenerator die Regeneratoren Ra, Rb, Rn angeordnet, in denen die einleitend bereits erwähnte Amplituden- und zeitmäßige Formung der übetragenen Impulse erfolgt. Empfangsseitig ist ein weiteres Leitungsendgerät LEB1 angeordnet, in dem die übertragenen Signale erneut regeneriert und anschließend in die für die nachfolgende Einrichtung geforderte Form gebracht werden. Da im vorliegenden Falle an das Leitungsendgerät LEB1 ein Demultiplexer DE-MUX angeschaltet ist, enthält das Leitungsendgerät einen Entwürfler und gegebenenfalls auch eine Einrichtung zur Umcodierung. Zusätzlich ist im Leitungsendgerät LEB1 eine Einrichtung zur Bitfehlerratenüberwachung vorgesehen. Diese Einrichtung enthält einen Anschluß für einen Alarmgeber, der bei Überschreiten einer voreingestellten Schwelle eine Alarmierung bewirkt.

Außerdem ist im empfangsseitigen Leitungsendgerät LEB1 ein sogenannter AIS-Generator vorgesehen. Dieser AIS-Generator erzeugt bei Übertragungsstörungen, beispielsweise bei Synchronisationsstörungen ein sogenanntes, beispielsweise aus einer Dauer-Eins-Folge gebildetes AIS-Signal. Die Bezeichnung AIS leitet sich vom »Alarm-Indicationsignal« bzw. von »Alarm Inhibit Signal« ab. Dieses Signal dient dazu, im nachfolgenden Signalweg den Synchronismus aufrecht zu erhalten und an einer folgenden auswertenden Stelle den Alarm zu unterdrücken. Dadurch wird vermieden, daß bei einer Störung in der vorgeschalteten Übertragungsstrecke die gesamte Signalübertragungseinrichtung gestört wird und jede Stelle Alarmsignale abgibt. Zu diesem Zweck enthalten die Signalübertragungseinrichtungen eine Erkennungsschaltung für das AIS-Signal. Der AIS-Generator ist über einen Umschalter mit dem Ausgang des empfangsseitigen Leitungsendgerätes verbunden, bei Überschreiten einer bestimmten Bitfehlerrate wird der Umschalter betätigt und dadurch der Ausgang des Leitungsendgerätes von dem in diesem enthaltenen Regenerator für die digitalen Signale auf den AIS-Generator umgeschaltet.

Die in der Fig. 2 dargestellte Übertragungsstrecke für digitale Signale mit drei Ortungs- und auch Fernspeiseabschnitten enthält im ersten Fernspeiseabschnitt ein Leitungsendgerät LEA2 mit Anschluß Sp1 für eine erste Speisespannung. Der erste Fernspeiseabschnitt umfaßt weiterhin einen ersten Zwischenregenerator ZWR1 mit zwei Regeneratoren R11, R12 für die beiden Übertragungsrichtungen. Im Signalweg schließt sich an den ersten Zwischenregenerator ein zweiter Zwischenregenerator ZWR2 (ZF) und ein dritter Zwischenregenerator ZWR3 an. Diese beiden Zwischenregeneratoren sind in einem zweiten Fernspeiseabschnitt angeordnet, der über den zweiten Zwischenregenerator gespeist wird. Dieser Zwischenregenerator ZWR2 (ZF) enthält dazu Anschlüsse Sp2 für eine zweite Speisespannung. Diese Zwischenregeneratoren enthalten jeweils einen Regenerator R21, R31 für die eine bzw. R22, R32 für die andere Übertragungsrichtung.

Der dritte Fernspeiseabschnitt enthält einen vierten Zwischenregenerator und ein zweites Leitungsendgerät LEB2, das über die Anschlüsse Sp3 an eine dritte Speisespannung angeschlossen ist.

In den beiden Leitungsendgeräten LEA2, LEB2 sind zusätzlich zu den erwähnten AIS-Generatoren auch Überwachungseinrichtungen für das digitale Signal vorgesehen, die an eine Überwachungsverbindung ÜV angeschlossen sind. Diese Überwachungsverbindung ist mittels einer handelsüblichen Fernwirkeinrichtung aufgebaut und bis zu einer zentralen Stelle geführt, von der aus die Überwachung mehrerer Übertragungsstrecken erfolgt. Die überwachende Stelle kann einem der beiden Leitungsendgeräte direkt zugeordnet sein.

Zusätzlich ist in dem im zweiten Fernspeiseabschnitt enthaltenen zweiten Zwischenregenerator ZWR2 (ZF) eine Einrichtung zur Fehlerratenüberwachung und ein mit dieser verbundener AIS-Generator vorgesehen. Die Einrichtung zur Fehlerratenüberwachung ist ebenfalls an die Überwachungsverbindung ÜV angeschlossen. Bei einem Fehler beispielsweise im Regenerator R11 des ersten Zwischenregenerators ZWR1 erfolgt eine Fehlererkennung bereits in dem diesem nachgeschalteten zweiten Zwischenregenerator ZWR2, so daß die über die Überwachungsverbindung ÜV angeschlossene ortende Stelle eine mittels Schleifenschluß erfolgende Fehlerlokalisierung auf den ersten Fernspeiseabschnitt und den zweiten Zwischenregenerator beschränken kann. In der Praxis können nun in einem Fernspeiseabschnitt beispielsweise bis zu 50 Zwischenregeneratoren angeordnet sein, so daß sich durch diese Fehlereingrenzung eine erhebliche Verringerung der Ortungszeit und damit der Ausfallzeit der Übertragungsstrecke ergeben kann.

Außerdem wird von dem speisenden Zwischenregenerator ZWR2 (ZF) über den zusätzlich enthaltenen AIS-Generator ein AIS-Signal an die nachfolgende Übertragungsstrecke abgegeben, und dadurch vermieden, daß von nachgeschalteten Überwachungseinrichtungen weitere Alarmsignale abgegeben werden. Dadurch ist es beispielsweise auch sichergestellt, daß im zweiten Leitungsendgerät oder in einem mit diesem verbundenen Dateneinfügungsgerät eine Signaleinblendung erfolgen kann, auch wenn im Streckenabschnitt davor eine Synchronisationsstörung aufgetreten ist.

**Patentansprüche**

1. Übertragungsstrecke für digitale Signale mit zwei Leitungsendgeräten (LEA2, LEB2), die durch eine Kabelstrecke mit mehreren ferngespeisten Zwischenregeneratoren (ZWR1 bis ZWR4) verbunden sind und bei der die Kabelstrecke in wenigstens zwei getrennte Fernspeiseabschnitte aufgeteilt ist, bei der wenigstens in einem Leitungsendgerät eine Überwachungseinrichtung für die zu übertragenden digitalen Signale vorgesehen ist und bei der der Ausgang der Überwachungseinrichtung mit einer auswertenden Stelle verbunden ist, dadurch gekennzeichnet, daß wenigstens ein Fernspeiseabschnitt über einen Fernspeiseeinrichtungen enthaltenden Zwischenregenerator (ZWR2, ZF) gespeist ist und daß dieser Zwischenregenerator eine Überwachungseinrichtung für die zu übertragenden digitalen Signale, eine Einrichtung zur Erzeugung eines AIS-Signals (AIS = Alarm Inhibit Signal) und einen Alarmgeber enthält.

2. Übertragungsstrecke nach Anspruch 1, dadurch gekennzeichnet, daß die Überwachungseinrichtung für die zu übertragenden digitalen Signale zur Überwachung der Bitfehlerrate dieser Signale eingerichtet ist.

3. Übertragungsstrecke nach Anspruch 1, dadurch gekennzeichnet, daß die Einrichtung zur Erzeugung eines AIS-Signals für die Erzeugung einer Dauer-Eins-Folge ausgebildet ist.

4. Übertragungsstrecke nach Anspruch 1, dadurch gekennzeichnet, daß der Alarmgeber ausgangsseitig mit einer zentralen auswertenden Stelle verbunden ist.

## Claims

1. Transmission link for digital signals with two line terminal devices (LEA2, LEB2) which are connected to a plurality of remote-fed intermediate regenerators (ZWR1 to ZWR4) by means of a cable path, and wherein the cable path is divided into at least two separate remotefeed sections, wherein a monitoring device for the digital signals to be transmitted is arranged in at least one line terminal device, and wherein the output of the monitoring device is connected to an analysing station, characterised in that at least one remote-feed section is fed via an intermediate regenerator (ZWR2, ZF) which contains remote-feed devices, and that the intermediate regenerator comprises a monitoring device for the digital signals to be transmitted, a device for producing an AIS-signal (AIS = alarm inhibit signal) and an alarm generator.

2. Transmission link as claimed in claim 1, characterised in that the monitoring device for the digital signals to be transmitted is designed for the monitoring of the bit error rate of these signals.

3. Transmission link as claimed in claim 1, characterised in that the device for the production of an AIS-signal is designed for the production of a continuous-one-sequence.

4. Transmission link as claimed in claim 1, characterised in that at the output end the alarm generator is connected to a central analysing station.

## Revendications

1. Ligne de transmission pour des signaux numériques comportant deux postes terminaux de ligne (LEA2, LEB2) qui sont couplés par une section de câble qui comporte plusieurs régénérateurs intermédiaires (ZWR1 à ZWR4) alimentés à distance, et dans laquelle la section de câble est subdivisée en au moins deux sections distinctes d'alimentation à distance, dans laquelle au moins dans un poste terminal de ligne il est prévu un dispositif de surveillance pour les signaux numériques devant être transmis, et dans laquelle la sortie du dispositif de surveillance est couplée à un poste d'évaluation, caractérisée par le fait qu'au moins une section d'alimentation à distance est alimentée par l'intermédiaire d'un régénérateur intermédiaire (ZWR2, ZF) contenant des dispositifs d'alimentation à distance, et que ce régénérateur intermédiaire contient un dispositif de surveillance pour les signaux numériques devant être transmis, un dispositif pour produire un signal AIS (AIS = Alarm Inhibit Signal) et un générateur d'alarme.

2. Ligne de transmission suivant la revendication 1, caractérisée par le fait que le dispositif de surveillance pour les signaux numériques devant être transmis est agencé pour surveiller le taux d'erreurs de bits de ces signaux.

3. Ligne de transmission suivant la revendication 1, caractérisée par le fait que le dispositif pour produire un signal AIS est conçu pour produire une succession continue de un.

4. Ligne de transmission suivant la revendication 1, caractérisée par le fait que le générateur d'alarme est relié, côté sortie, à un poste d'évaluation central.

0 031 943

## FIG 1

| | | | | |
|---|---|---|---|---|
| LEA1 | Ra | Rb | Rn | LEB1 |

DS · AIS

DEMUX

## FIG 2

| LEA2 | ZWR1 | ZWR2(ZF) | ZWR3 | ZWR4 | LEB2 |
|------|------|----------|------|------|------|
|      | R11  | R21      | R31  | R41  |      |
|      | R12  | R22      | R32  | R42  |      |

Sp1        Sp2        Sp3

ÜV